# EUROPEAN PATENT APPLICATION

(11) **EP 4 717 516 A1**
(43) Date of publication of application: **01.04.2026**
(21) Application number: 24881292.7
(22) Date of filing: 10.09.2024
(51) Int. Cl.: B60L 58/26, B60K 11/06, H01M 10/613

(54) **THERMAL MANAGEMENT DEVICE FOR ELECTRIC VEHICLE, CHARGING SYSTEM AND CHARGING STATION**

(30) Priority: 23.10.2023 CN 202311379785
(71) Applicant: Wuhan Lotus Cars Co., Ltd., Wuhan, Hubei 430056 (CN)
(72) Inventor: XU, Yuanxing, Wuhan, Hubei 430056 (CN)
(74) Representative: Barker Brettell LLP
(86) International application number: PCT/CN2024/118073
(87) International publication number: WO 2025/086926

(57) **Abstract**

The present application provides a thermal management apparatus for an electric vehicle, the thermal management apparatus includes a connecting apparatus, where the connecting apparatus includes: an air intake port provided on a first end of the connecting apparatus; an air outlet port provided on a second end of the connecting apparatus; and a channel provided within the connecting apparatus and used for gas flow, where one end of the channel is the air intake port and the other end of the channel is the air outlet port, where the air intake port is used to receive gas, a temperature of the gas flowing in through the air intake port being lower than an ambient temperature of an environment where the thermal management apparatus is located, and the gas flows out through the air outlet port after passing through the channel, and where the second end of the connecting apparatus is used to connect or contact a grille of the electric vehicle, an edge of the second end of the connecting apparatus being able to cover the grille of the electric vehicle, and a temperature of the gas flowing out through the air outlet port is lower than the ambient temperature, to cool a component inside the grille.

## Description

The present application claims priority to Chinese Patent Application No. 202311379785.3, filed with the China National Intellectual Property Administration on October 23, 2023 and entitled "THERMAL MANAGEMENT APPARATUS FOR ELECTRIC VEHICLE, CHARGING SYSTEM, AND CHARGING PILE", the contents of which are hereby incorporated by reference in its entirety.

### TECHNICAL FIELD

The present application relates to the field of electric vehicles, and in particular, to a thermal management apparatus for an electric vehicle, a charging system including the thermal management apparatus for the electric vehicle, and a charging pile including the thermal management apparatus for the electric vehicle or the charging system.

### BACKGROUND

With the rapid development of the battery electric vehicle and plug-in electric vehicle industries in the automotive sector both domestically and internationally, as well as the increasingly comprehensive configuration of various vehicle functions, consumers are now placing higher and higher requirements on the capacity of an energy storage component, namely a power battery pack, etc. Concomitantly, the consumers have also put forward higher demands for charging speed and efficiency.

Generally, in terms of charging time, household battery electric passenger vehicles now basically require one-hour charging to meet convenience requirements. With the breakthroughs in capabilities of power distribution grids and charging piles, it has become possible to shorten charging time by increasing charging power. However, the increase in charging power and charging current also poses higher demands on battery thermal management. Currently, when power batteries need to be cooled, electric vehicles all rely on refrigeration capacity of an air conditioning system to achieve heat dissipation.

As mentioned before, existing battery cooling and heating functions are achieved using an electric vehicle's own air conditioning system for refrigeration, thereby cooling antifreeze fluid and then cooling a battery through the flow of the antifreeze fluid.

Cooling functions of power batteries for existing electric vehicles or hybrid vehicles on the market mainly include two methods: passive cooling and active cooling. For passive cooling technology, when an ambient temperature is relatively low, a cooling circuit is connected in series through a four-way valve, and a coolant, under the driving force of a water pump, transports the heat generated by a power battery to a radiator. Air flows through the radiator under the action of the fan, taking away the heat carried by the coolant flowing inside the radiator, thereby achieving the cooling of the power battery. For active cooling technology, when the ambient temperature is relatively high, it is impossible to achieve direct heat dissipation for the power battery through the radiator. In this case, the cooling circuit is connected in parallel through the switching of the four-way valve, the coolant flows through a heat exchanger to first transfer the heat from the power battery to a refrigerant in another circuit, and then to the external environment through a condenser. In this mode, the cooling capacity of the battery is limited by the ambient temperature, and the higher the ambient temperature, the lower the cooling capacity.

When a vehicle undergoes high-power charging, a power battery will generate a large amount of heat. If the heat cannot be promptly removed, to ensure the safety of the power battery, charging power will be limited.

When charging is performed in a high-temperature environment, the coolant in the cooling circuit, under the driving force of the water pump, carries the heat generated by the power battery out. The heat is transferred to the refrigerant in another circuit through the heat exchanger, and the refrigerant flows through the condenser under the driving force of a compressor. The air in the environment flows through the condenser under the action of the fan, taking away the heat from the condenser. However, when the environment is too high, the difference between an air temperature flowing outside the condenser and a refrigerant temperature flowing inside the condenser decreases, resulting in a decline in the cooling effect of the condenser, thereby affecting the cooling capacity of the power battery, causing the charging power to decrease, and subsequently increasing charging time. In this case, a vehicle with a super-fast charging capability may not be able to enter a super-fast charging mode due to excessively high battery temperature.

### SUMMARY

To solve the above-mentioned problem, that is, current cooling power for temperature control achieved using in-vehicle air conditioning is insufficient to meet requirements, which also depends on an ambient temperature, thereby affecting an overall temperature control effect for a power battery, and potentially having an adverse impact on fast charging of the power battery and possibly prolonging charging time, which is detrimental to development of electric vehicles. The inventor of the content of the present disclosure have innovatively conceived of using an external cooling system to lower an ambient temperature of an environment where a power battery is located, thereby accelerating a cooling speed of the power battery, ensuring smooth progress of fast charging of the power battery, and thereby a cooling speed of a power battery pack reaches an ideal state, increasing charging power, shortening charging time, and enhancing customer satisfaction and product competitiveness.

A first aspect of the content of the present disclosure provides a thermal management apparatus for an electric vehicle, where the thermal management apparatus includes a connecting apparatus, where the connecting apparatus includes:
an air intake port provided on a first end of the connecting apparatus;
an air outlet port provided on a second end of the connecting apparatus; and
a channel provided within the connecting apparatus and used for gas flow, where one end of the channel is the air intake port and the other end of the channel is the air outlet port,
where the air intake port is used to receive gas, a temperature of the gas flowing in through the air intake port being lower than an ambient temperature of an environment where the thermal management apparatus is located, and the gas flows out through the air outlet port after passing through the channel, and
where the second end of the connecting apparatus is used to connect or contact a grille of the electric vehicle, an edge of the second end of the connecting apparatus being able to cover the grille of the electric vehicle, and a temperature of the gas flowing out through the air outlet port is lower than the ambient temperature, to cool a component inside the grille.

In this way, the gas with the temperature lower than the ambient temperature outside the vehicle can be input into a space behind the grille of the vehicle under the action of the connecting apparatus. There is a power battery stored in this space, thereby accelerating a cooling process of the power battery to meet a cooling requirement during charging of the power battery, so that a cooling speed of a power battery pack reaches an ideal state, increasing charging power, shortening charging time, and enhancing customer satisfaction and product competitiveness.

In an embodiment according to the content of the present disclosure, the second end of the connecting apparatus is constructed as scalable, and a size of the second end of the connecting apparatus is adjustable according to a size of the grille.

In this way, the thermal management apparatus for the electric vehicle according to the content of the present disclosure can be adapted to different sizes of vehicle front facades, application scenarios of the thermal management apparatus for the electric vehicle according to the present application are expanded. In an embodiment according to the content of the present disclosure, the connecting apparatus includes an outer frame and an inner frame, the outer frame is located outside the inner frame, the channel is provided inside the inner frame, and a size of the inner frame is adjustable. In an embodiment according to the content of the present disclosure, the connecting apparatus further includes an elastic member, the elastic member is provided at the second end of the connecting apparatus, and the elastic member is used for sealing with a housing of the vehicle. In an embodiment according to the content of the present disclosure, the connecting apparatus further includes a sealing structure, and the sealing structure is provided at the air outlet port and is used to form a sealed connection between the air outlet port and the grille.

In an embodiment according to the content of the present disclosure, the thermal management apparatus further includes:
a flow rate control apparatus, where the flow rate control apparatus is in fluid communication with the air intake port and is configured to regulate a gas flow rate at the air outlet port.

In this way, the thermal management apparatus for the electric vehicle according to the content of the present disclosure can provide gas with a corresponding flow rate in a targeted manner according to cooling requirements of different vehicles in different ambient temperatures and different charging current magnitudes, so that the thermal management apparatus for the electric vehicle according to the content of the present disclosure can meet cooling requirements of electric vehicles to be charged in a more targeted manner.

In order to acquire a target flow rate value, in an embodiment according to the content of the present disclosure, the thermal management apparatus further includes:
a refrigeration apparatus, where the refrigeration apparatus is connected to the connecting apparatus, and the refrigeration apparatus is configured to output gas with a temperature lower than the ambient temperature to the air intake port.

In this way, the thermal management apparatus for the electric vehicle according to the content of the present disclosure can include the independent refrigeration apparatus, thereby not relying on the operation of an external refrigerator, but providing the gas with the temperature lower than the ambient temperature by the refrigeration apparatus configured in the thermal management apparatus, thereby further expanding the application scenarios of the thermal management apparatus for the electric vehicle according to the content of the present disclosure.

In an embodiment according to the content of the present disclosure, the thermal management apparatus further includes a control module, and the control module is connected to the refrigeration apparatus and is configured to regulate the temperature of the gas output by the refrigeration apparatus to the air intake port. To acquire a target temperature value, in an embodiment according to the content of the present disclosure, the thermal management apparatus further includes an input apparatus, the input apparatus is configured to receive the target temperature value, and the control module is configured to regulate the temperature of the gas output by the refrigeration apparatus to the air intake port according to the target temperature value.

In an embodiment according to the content of the present disclosure, the refrigeration apparatus includes a compressor, an evaporator, a condenser, and a refrigerant pipeline used for connecting the compressor, the evaporator, and the condenser. In this way, the thermal management apparatus according to the content of the present disclosure also has the refrigerant pipeline, thereby enabling further optimized regulation of a temperature of gas entering the connecting apparatus. Herein, a single connecting apparatus may use one refrigeration apparatus, or, two or three connecting apparatus may share one refrigeration apparatus, for example. In an embodiment according to the content of the present disclosure, one said refrigeration apparatus is connected to one said connecting apparatus, or, one said refrigeration apparatus is connected to at least two said connecting apparatuses.

In an embodiment according to the content of the present disclosure, the thermal management apparatus further includes a moving apparatus, the moving apparatus is provided on the connecting apparatus and is configured to adjust a position of the connecting apparatus relative to the grille of the electric vehicle. In this way, the thermal management apparatus for the electric vehicle according to the content of the present disclosure can move to a position of the electric vehicle to be charged after determining the position of the electric vehicle, thereby enabling the connecting apparatus to be in mechanical connection with the electric vehicle conveniently.

In an embodiment according to the content of the present disclosure, the thermal management apparatus further includes: a locking apparatus, where the locking apparatus locks the connecting apparatus when the connecting apparatus reaches a preset position. In this way, the thermal management apparatus for the electric vehicle according to the content of the present disclosure can move to the position of the electric vehicle to be charged after determining the position of the electric vehicle, and then enable the connecting apparatus to be in mechanical connection with the electric vehicle conveniently. Then, to further improve a connection effect, the connecting apparatus can be locked with the help of the locking apparatus.

In an embodiment according to the content of the present disclosure, the thermal management apparatus further includes a communication module and a control module, where the communication module is configured to acquire position information of the electric vehicle, and the control module is configured to control the moving apparatus to drive the connecting apparatus to move according to the position information, to cause the connecting apparatus to be connected to or contact the grille. In this way, the thermal management apparatus for the electric vehicle according to the content of the present disclosure can acquire the position information of the electric vehicle to be charged, thereby enabling the connecting apparatus to conveniently move to the position of the electric vehicle and be in mechanical connection with the electric vehicle. In an embodiment according to the content of the present disclosure, the communication module is further configured to acquire size information of the grille, and the control module is further configured to adjust a size of the second end of the connecting apparatus according to the size information of the grille, to cause the connecting apparatus to be adapted to the grille.

In an embodiment according to the content of the present disclosure, the thermal management apparatus further includes an image acquisition apparatus and a control module, where the image acquisition apparatus is configured to acquire image information of the electric vehicle, the control module acquires position information of the electric vehicle according to the image information of the electric vehicle, and the control module is further configured to control the moving apparatus to drive the connecting apparatus to move according to the position information, to cause the connecting apparatus to be connected to or contact the grille. In this way, the thermal management apparatus for the electric vehicle according to the content of the present disclosure can acquire the position information of the electric vehicle to be charged, thereby enabling the connecting apparatus to conveniently move to the position of the electric vehicle and be in mechanical connection with the electric vehicle. In an embodiment according to the content of the present disclosure, the control module is further configured to acquire size information of the grille of the electric vehicle according to the image information of the electric vehicle, and the control module is further configured to adjust a size of the second end of the connecting apparatus according to the size information of the grille, to cause the connecting apparatus to be adapted to the grille. In this way, the thermal management apparatus for the electric vehicle according to the content of the present disclosure can dynamically determine a size of an air intake grille of a front facade of the electric vehicle to be charged according to an acquired image after determining the position of the electric vehicle to be charged, thereby enabling the connecting apparatus to be conveniently adapted to the size and be in mechanical connection with the air intake grille.

In an embodiment according to the content of the present disclosure, the thermal management apparatus further includes an input apparatus and a control module, where the input apparatus is configured to receive position information of the electric vehicle, and the control module is further configured to control the moving apparatus to drive the connecting apparatus to move according to the position information, to cause the connecting apparatus to be connected to or contact the grille. In an embodiment according to the content of the present disclosure, the input apparatus is further configured to receive size information of the grille, and the control module is further configured to adjust a size of the second end of the connecting apparatus according to the size information of the grille, to cause the connecting apparatus to be adapted to the grille.

Furthermore, a second aspect of the content of the present disclosure provides a charging pile, where the charging pile includes the thermal management apparatus provided in the first aspect according to the content of the present disclosure.

Additionally, a third aspect of the content of the present disclosure provides a charging system, where the charging system includes the thermal management apparatus provided in the first aspect according to the content of the present disclosure or the charging pile provided in the second aspect according to the content of the present disclosure.

In conclusion, in the thermal management apparatus for the electric vehicle, the charging system or the charging pile according to the content of the present disclosure, the gas with the temperature lower than the ambient temperature outside the vehicle can be input into the space behind the grille of the vehicle under the action of the connecting apparatus. There is the power battery stored in this space, thereby accelerating the cooling process of the power battery to meet the cooling requirement during the charging of the power battery, so that the cooling speed of the power battery pack reaches the ideal state, increasing the charging power, shortening the charging time, enhancing the customer satisfaction and the product competitiveness.

### BRIEF DESCRIPTION OF DRAWINGS

FIG. 1 illustrates an exemplary block diagram of a thermal management apparatus according to an embodiment of the content of the present disclosure.
FIG. 2 illustrates an exemplary block diagram of a thermal management apparatus according to another embodiment of the content of the present disclosure.
FIG. 3 illustrates an exemplary block diagram of a thermal management apparatus according to yet another embodiment of the content of the present disclosure.
FIG. 4 illustrates an exemplary block diagram of a charging system according to an embodiment of the content of the present disclosure.

### DESCRIPTION OF EMBODIMENTS

The following describes in detail various exemplary embodiments of the content of the present disclosure with reference to the drawings. Although exemplary methods and apparatuses described below includes software and/or firmware executed by hardware in other components, it should be noted that these examples are merely illustrative and should not be construed as limiting. For example, it is contemplated that any or all hardware, software, and firmware components may be implemented exclusively in hardware, exclusively in software, or in any combination of hardware and software. Therefore, although the exemplary methods and apparatuses have been described below, those skilled in the art should easily understand that the provided examples are not intended to limit the ways in which these methods and apparatuses may be implemented.

Furthermore, flowcharts and block diagrams in the drawings illustrate possible architectures, functions, and operations of methods and systems according to various embodiments of the content of the present disclosure. It should be noted that functions marked in blocks may occur in a different order than that marked in the drawings. For example, two successively depicted blocks may actually be executed substantially in parallel, or they may sometimes be executed in a reverse order, depending on functions involved. It should also be noted that each block in the flowcharts and/or the block diagrams, as well as combinations of blocks in the flowcharts and/or the block diagrams, may be implemented using a dedicated hardware-based system that performs specified functions or operations, or may be implemented using a combination of dedicated hardware and computer instructions.

The terms "include", "contain", and similar terms used herein are open-ended terms, i.e., "include/contain but are not limited to", indicating that other contents may also be included. The term "based on" refers to "at least partially based on". The term "an embodiment" indicates "at least one embodiment"; the term "another embodiment" indicates "at least one additional embodiment", and so on.

As mentioned earlier, in one of the examples, the cooling power for temperature control achieved using the in-vehicle air conditioning is insufficient to meet the requirements, which also depends on the ambient temperature, thereby affecting the overall thermal control effect of the power battery, and potentially having the adverse impact on the fast charging of the power battery and possibly prolonging the charging time, all of which are detrimental to the development of the electric vehicles.

To solve the above-mentioned technical problem, the inventor of the content of the present disclosure have innovatively conceived of using an external cooling system to lower an ambient temperature of an environment where a power battery is located, thereby accelerating a cooling speed of the power battery, ensuring smooth progress of fast charging of the power battery, and thereby a cooling speed of a power battery pack reaches an ideal state, increasing charging power, shortening charging time, enhancing customer satisfaction and product competitiveness. The content of the present disclosure provides a thermal management apparatus for an electric vehicle, where the thermal management apparatus includes a connecting apparatus, where the connecting apparatus includes: an air intake port provided on a first end of the connecting apparatus; an air outlet port provided on a second end of the connecting apparatus; and a channel provided within the connecting apparatus and used for gas flow, where one end of the channel is the air intake port and the other end of the channel is the air outlet port, where the air intake port is used to receive gas, a temperature of the gas flowing in through the air intake port being lower than an ambient temperature of an environment where the thermal management apparatus is located, and the gas flows out through the air outlet port after passing through the channel, and where the second end of the connecting apparatus is used to connect or contact a grille of the electric vehicle, an edge of the second end of the connecting apparatus being able to cover the grille of the electric vehicle, and a temperature of the gas flowing out through the air outlet port is lower than the ambient temperature, to cool a component inside the grille. In this way, the gas with the temperature lower than the ambient temperature outside the vehicle can be input into a space behind the grille of the vehicle under the action of the connecting apparatus. There is a power battery stored in this space, thereby accelerating a cooling process of the power battery to meet a cooling requirement during charging of the power battery, so that a cooling speed of a power battery pack reaches an ideal state, increasing charging power, shortening charging time, and enhancing customer satisfaction and product competitiveness.

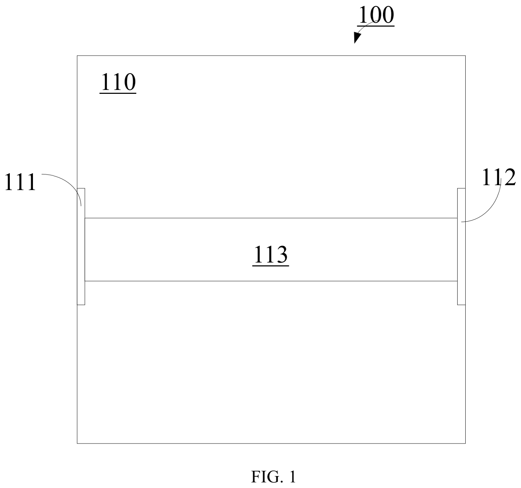

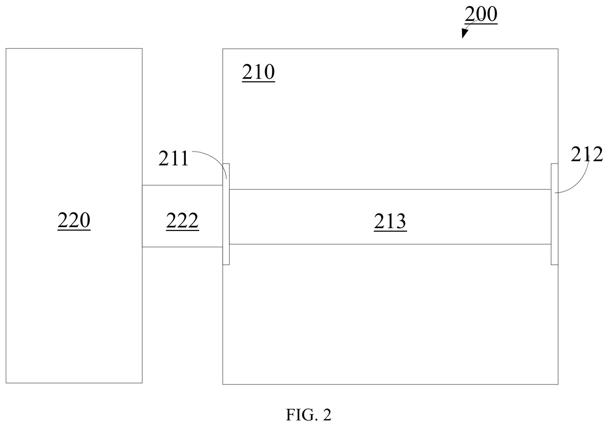

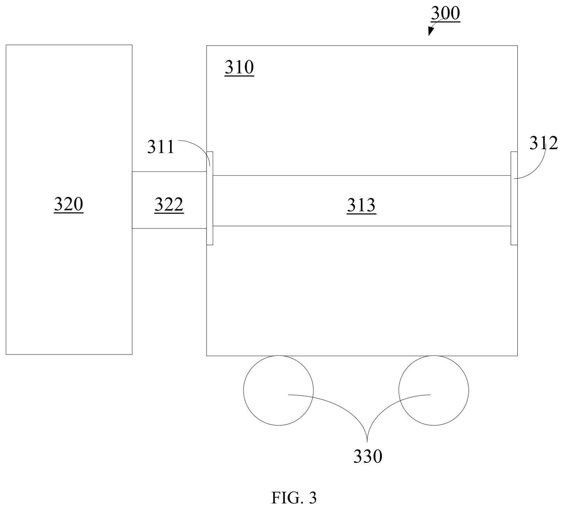

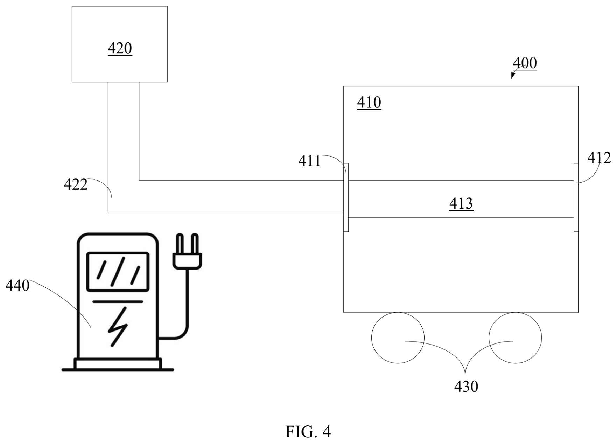

The following will describe a thermal management apparatus, a charging pile and a corresponding charging system according to the content of the present disclosure, with reference to the attached drawings. FIG. 1 illustrates an exemplary block diagram of a thermal management apparatus according to an embodiment of the content of the present disclosure, FIG. 2 illustrates an exemplary block diagram of a thermal management apparatus according to another embodiment of the content of the present disclosure, FIG. 3 illustrates an exemplary block diagram of a thermal management apparatus according to yet another embodiment of the content of the present disclosure, and FIG. 4 illustrates an exemplary block diagram of a charging system according to an embodiment of the content of the present disclosure.

As can be seen from FIG. 1, a thermal management apparatus 100 for an electric vehicle according to the content of the present disclosure at least includes a connecting apparatus 110, where the connecting apparatus 110 includes an air intake port 111 provided on a first end of the connecting apparatus 110 (for example, a left end as shown in FIG. 1), an air outlet port 112 provided on a second end of the connecting apparatus 110 (for example, a right end as shown in FIG. 1), and a channel 113 provided within the connecting apparatus 110 and used for gas flow, where one end of the channel 113 is the air intake port 111 and the other end of the channel 113 is the air outlet port 112, where the air intake port 111 is used to receive gas, a temperature of the gas flowing in through the air intake port 111 being lower than an ambient temperature of an environment where the thermal management apparatus 100 is located, and the gas flows out through the air outlet port 112 after passing through the channel 113, and where the second end of the connecting apparatus 110 is used to connect or contact a grille of the electric vehicle (not shown in the drawings), an edge of the second end of the connecting apparatus 110 being able to cover the grille of the electric vehicle, and a temperature of the gas flowing out through the air outlet port 112 is lower than the ambient temperature, to cool a component inside the grille. In this way, the gas with the temperature lower than the ambient temperature outside the vehicle can be input into a space behind the grille of the vehicle under the action of the connecting apparatus 110. There is a power battery stored in this space, thereby accelerating a cooling process of the power battery to meet a cooling requirement during charging of the power battery, so that a cooling speed of a power battery pack reaches an ideal state, increasing charging power, shortening charging time, and enhancing customer satisfaction and product competitiveness.

Herein, the temperature of the gas flowing in through the air intake port is lower than the ambient temperature of the environment where the thermal management apparatus is located, for example, the gas may be extracted from a basement of a building or from other positions with a temperature lower than the current ambient temperature. The gas at these positions has a temperature lower than the current ambient temperature. That is to say, the thermal management apparatus according to the content of the present disclosure at least includes the connecting apparatus 110, which is used to adapt to the grille of the electric vehicle, and the air outlet port 112 in fluid communication with the air intake port 111 is provided on one side of the connecting apparatus 110 (for example, the right side as shown in FIG. 1), where an outer contour (for example, there is an elastic body whose periphery can be adjusted in terms of shape, size, and dimension for shaping) of the air outlet port 112 of the connecting apparatus 110 can cover the grille and the gas with the temperature lower than the ambient temperature is output through the air outlet port 112. Herein, the air outlet port 112 may be provided as a small opening on a housing of the connecting apparatus 110 or may be designed to be an air outlet port having a size corresponding to an opening formed by the elastic body covering the grille. In an embodiment according to the content of the present disclosure, in order to adapt to different sizes of air intake grilles of front facades of different electric vehicles to be charged, a side of the connecting apparatus 110 adjacent to the electric vehicle (for example, the right side as shown in FIG. 1) is constructed as scalable, and its size can be adapted according to a size of the grille. In this way, the thermal management apparatus 100 for the electric vehicle according to the content of the present disclosure can be adapted to different sizes of vehicle front facades, application scenarios of the thermal management apparatus 100 for the electric vehicle according to the content of the present disclosure are expanded.

Furthermore, since different electric vehicles to be charged have different cooling requirements, corresponding control modules or control apparatuses may also be designed, which, for example, are designed to be a flow rate control apparatus (not shown in the drawings), where the flow rate control apparatus is in fluid communication with the air intake port and is configured to regulate a gas flow rate at the air outlet port. In this way, the thermal management apparatus for the electric vehicle according to the content of the present disclosure can provide gas with a corresponding flow rate in a targeted manner according to cooling requirements of different vehicles in different ambient temperatures and different charging current magnitudes, so that the thermal management apparatus for the electric vehicle according to the content of the present disclosure can meet cooling requirements of electric vehicles to be charged in a more targeted manner.

Moreover, in order to further control a temperature entering the thermal management apparatus according to the content of the present disclosure, the thermal management apparatus may further include a refrigeration apparatus. FIG. 2 illustrates an exemplary block diagram of a thermal management apparatus according to another embodiment of the content of the present disclosure. As can be seen from FIG. 2, the thermal management apparatus according to the content of the present disclosure mainly includes two parts. Firstly, the thermal management apparatus 200 according to the content of the present disclosure includes a connecting apparatus 210, where the connecting apparatus 210 includes an air intake port 211 provided on a first end of the connecting apparatus 210 (for example, a left end as shown in FIG. 2), an air outlet port 212 provided on a second end of the connecting apparatus 210 (for example, a right end as shown in FIG. 2), and a channel 213 provided within the connecting apparatus 210 and used for gas flow, where one end of the channel 213 is the air intake port 211 and the other end of the channel 213 is the air outlet port 212, where the air intake port 211 is used to receive gas, and a temperature of the gas flowing in through the air intake port 211 is lower than an ambient temperature of an environment where the thermal management apparatus 200 is located, and the gas flows out through the air outlet port 212 after passing through the channel 213, and where the second end of the connecting apparatus 210 is used to connect or contact a grille of the electric vehicle (not shown in the drawings), an edge of the second end of the connecting apparatus 210 being able to cover the grille of the electric vehicle, and a temperature of the gas flowing out through the air outlet port 212 is lower than the ambient temperature, to cool a component inside the grille. In this way, the gas with the temperature lower than the ambient temperature outside the vehicle can be input into a space behind the grille of the vehicle under the action of the connecting apparatus 210. There is a power battery stored in this space, thereby accelerating a cooling process of the power battery to meet a cooling requirement during charging of the power battery, so that a cooling speed of a power battery pack reaches an ideal state, increasing charging power, shortening charging time, and enhancing customer satisfaction and product competitiveness. Furthermore, secondly, the thermal management apparatus 200 further includes a refrigeration apparatus 220, where the refrigeration apparatus 220 is connected to the connecting apparatus 210, for example, through a pipeline 222, and the refrigeration apparatus 220 is configured to output gas with a temperature lower than the ambient temperature to the air intake port 211. In this way, the thermal management apparatus 200 for the electric vehicle according to the content of the present disclosure can include the independent refrigeration apparatus 220, thereby not relying on the operation of an external refrigerator, but providing the gas with the temperature lower than the ambient temperature by the refrigeration apparatus 220 configured in the thermal management apparatus, thereby further expanding the application scenarios of the thermal management apparatus 200 for the electric vehicle according to the content of the present disclosure.

In order to enable the connecting apparatus 210 to better cover an air intake grille of the electric vehicle to be charged, for example, a right side of a housing of the connecting apparatus 210 may include an outer frame (for example, the periphery of the air outlet port 212) and an inner frame (a housing part forming the air outlet port 212), where the outer frame is located outside the inner frame, the channel 213 is provided inside the inner frame, and a size of the inner frame is adjustable. To further improve sealing between the connecting apparatus 210 and the electric vehicle to be charged, thereby increasing a utilization rate of the gas for cooling, the connecting apparatus 210 further includes a sealing structure (not shown in the drawings), and the sealing structure is provided at the air outlet port 212 and is used to form a sealed connection between the air outlet port 212 and the grille. Specifically, this sealing structure is, for example, constructed as an elastic member. In this case, the connecting apparatus 210 further includes an elastic member (not shown in the drawings), the elastic member is provided at the second end of the connecting apparatus 210 (the right end in FIG. 2), and the elastic member is used for sealing with a housing of the vehicle.

In order to acquire a target flow rate value, in an embodiment according to the content of the present disclosure, the thermal management apparatus 200 further includes an input apparatus (not shown in the drawings, such as a touch screen), the input apparatus is configured to receive the target flow rate value, and the flow rate control apparatus is configured to regulate a gas flow rate at the air outlet port 212 according to the target flow rate value.

In addition, the thermal management apparatus 200 may further include, for example, a control module (such as a microcontroller (Microcontroller Unit, abbreviated as MCU)), and the control module is connected to the refrigeration apparatus 220 and is configured to regulate the temperature of the gas output by the refrigeration apparatus 220 to the air intake port 211. To acquire a target temperature value, the thermal management apparatus 200 further includes an input apparatus (not shown in the drawings, such as a touch screen), where the input apparatus is configured to receive the target temperature value, and the control module is configured to regulate the temperature of the gas output by the refrigeration apparatus 220 to the air intake port 211 through the pipeline 222 according to the target temperature value.

A structure of the refrigeration apparatus 220 according to the content of the present disclosure will be further described below. Herein, the refrigeration apparatus 220 includes a compressor, an evaporator, a condenser, and a refrigerant pipeline for connecting the compressor, the evaporator, and the condenser. In this way, the thermal management apparatus according to the content of the present disclosure also has the refrigerant pipeline, thereby enabling further optimized regulation of a temperature of gas entering the connecting apparatus 210. Herein, a single connecting apparatus 210 may use one refrigeration apparatus 220, or, two or three connecting apparatus 210 may share one refrigeration apparatus 220, for example. In an embodiment according to the content of the present disclosure, one said refrigeration apparatus 220 is connected to one said connecting apparatus 210, or, one said refrigeration apparatus 220 is connected to at least two said connecting apparatuses 210.

To implement adjustment of a position of the connecting apparatus according to the content of the present disclosure, FIG. 3 illustrates an exemplary block diagram of a thermal management apparatus 300 according to yet another embodiment of the content of the present disclosure. As can be seen from FIG. 3, the thermal management apparatus according to the content of the present disclosure mainly includes two parts. Firstly, the thermal management apparatus 300 according to the content of the present disclosure includes a connecting apparatus 310, where the connecting apparatus 310 includes an air intake port 311 provided on a first end of the connecting apparatus 310 (for example, a left end as shown in FIG. 3), an air outlet port 312 provided at a second end of the connecting apparatus 310 (for example, a right end shown in FIG. 3), and a channel 313 provided within the connecting apparatus 310 and used for gas flow, where one end of the channel 313 is the air intake port 311, and the other end of the channel 313 is the air outlet port 312, where the air intake port 311 is used to receive gas, and a temperature of the gas flowing in through the air intake port 311 being lower than an ambient temperature of an environment where the thermal management apparatus 300 is located, and the gas flows out through the air outlet port 312 after passing through the channel 313, and where the second end of the connecting apparatus 310 is used to connect or contact a grille of the electric vehicle (not shown in the drawings), an edge of the second end of the connecting apparatus 310 being able to cover the grille of the electric vehicle, and a temperature of the gas flowing out through the air outlet port 312 is lower than the ambient temperature, to cool a component inside the grille. In this way, the gas with the temperature lower than the ambient temperature outside the vehicle can be input into a space behind the grille of the vehicle under the action of the connecting apparatus 310. There is a power battery stored in this space, thereby accelerating a cooling process of the power battery to meet a cooling requirement during charging of the power battery, so that a cooling speed of a power battery pack reaches an ideal state, increasing charging power, shortening charging time, and enhancing customer satisfaction and product competitiveness. Furthermore, secondly, the thermal management apparatus 300 further includes a refrigeration apparatus 320, where the refrigeration apparatus 320 is connected to the connecting apparatus 310, for example, through a pipeline 322, and the refrigeration apparatus 320 is configured to output gas with a temperature lower than the ambient temperature to the air intake port 311. In this way, the thermal management apparatus 300 for the electric vehicle according to the content of the present disclosure can include the independent refrigeration apparatus 320, thereby not relying on the operation of an external refrigerator, but providing the gas with the temperature lower than the ambient temperature by the refrigeration apparatus 320 configured in the thermal management apparatus, thereby further expanding the application scenarios of the thermal management apparatus 300 for the electric vehicle according to the content of the present disclosure.

In order to enable the connecting apparatus 310 to better cover an air intake grille of the electric vehicle to be charged, for example, a right side of a housing of the connecting apparatus 310 may include an outer frame (for example, the periphery of the air outlet port 312) and an inner frame (a housing part forming the air outlet port 312), where the outer frame is located outside the inner frame, the channel 313 is provided inside the inner frame, and a size of the inner frame is adjustable. To further improve sealing between the connecting apparatus 310 and the electric vehicle to be charged, thereby increasing a utilization rate of the gas for cooling, the connecting apparatus 310 further includes a sealing structure (not shown in the drawings), the sealing structure is provided at the air outlet port 312 and is used to form a sealed connection between the air outlet port 312 and the grille. Specifically, this sealing structure is, for example, constructed as an elastic member. In this case, the connecting apparatus 310 further includes an elastic member (not shown in the drawings), the elastic member is provided at the second end of the connecting apparatus 310 (the right end in FIG. 3), and the elastic member is used for sealing with a housing of the vehicle.

In order to acquire a target flow rate value, in an embodiment according to the content of the present disclosure, the thermal management apparatus 300 further includes an input apparatus (not shown in the drawings, such as a touch screen), the input apparatus is configured to receive the target flow rate value, and the flow rate control apparatus is configured to regulate a gas flow rate at the air outlet port 312 according to the target flow rate value.

In addition, the thermal management apparatus 300 may further include, for example, a control module (such as a microcontroller MCU), and the control module is connected to the refrigeration apparatus 320 and is configured to regulate the temperature of the gas output by the refrigeration apparatus 320 to the air intake port 311. To acquire a target temperature value, the thermal management apparatus 300 further includes an input apparatus (not shown in the drawings, such as a touch screen), where the input apparatus is configured to receive the target temperature value, and the control module is configured to regulate the temperature of the gas output by the refrigeration apparatus 320 to the air intake port 311 through the pipeline 322 according to the target temperature value.

A structure of the refrigeration apparatus 320 according to the content of the present disclosure will be further described below. Herein, the refrigeration apparatus 320 includes a compressor, an evaporator, a condenser, and a refrigerant pipeline for connecting the compressor, the evaporator, and the condenser. In this way, the thermal management apparatus according to the content of the present disclosure also has the refrigerant pipeline, thereby enabling further optimized regulation of a temperature of gas entering the connecting apparatus 310. Herein, a single connecting apparatus 310 may use one refrigeration apparatus 320, or, two or three connecting apparatus 310 may share one refrigeration apparatus 320, for example. In summary, in an embodiment according to the content of the present disclosure, one said refrigeration apparatus 320 is connected to one said connecting apparatus 310, or, one said refrigeration apparatus 320 is connected to at least two said connecting apparatus 310. In other words, generally, one charging pile needs to be equipped with one connecting apparatus, but multiple charging piles may share one cold source, i.e., a shared refrigeration apparatus.

In addition, the thermal management apparatus 300 further includes a moving apparatus 330 (such as rollers shown in the drawings), and the moving apparatus 330 is provided on the connecting apparatus 310 (for example, at the bottom of the connecting apparatus 310 in the drawings) and is configured to adjust a position of the connecting apparatus 310 relative to the grille of the electric vehicle (not shown in the drawings). In this way, the thermal management apparatus 300 for the electric vehicle according to the content of the present disclosure can move to a position of the electric vehicle to be charged after determining the position of the electric vehicle, thereby enabling the connecting apparatus 310 to be in mechanical connection with the electric vehicle conveniently. For example, a traveling mechanism 330, driven by its own motor, is integrated into a movable cold air module, which may automatically move according to a position of a charging vehicle detected by a camera of a vehicle covering assembly, ensuring alignment between a vehicle grille covering assembly and a charging vehicle's grille, and can provide a holding force between the vehicle grille covering assembly and the charging vehicle's grille, ensuring sealing between the vehicle grille covering assembly and the charging vehicle's grille during an operation process. The movable cold air module and a refrigeration unit are connected by an elastic pipeline 322, which allows the movable cold air module to move within a designed range to meet movement requirements of different vehicle models and different parking positions. The elastic pipeline 322 is protected by a corrugated pipeline on the outside to prevent the internal elastic pipeline 322 from being worn or damaged.

After being capable of moving, in an embodiment according to the content of the present disclosure, the thermal management apparatus 300 may further include a locking apparatus (such as a bearing pin capable of locking the above-mentioned rollers, which can stop the rollers from rotating), and the locking apparatus locks the connecting apparatus when the connecting apparatus 310 reaches a preset position. In this way, the thermal management apparatus 300 for the electric vehicle according to the content of the present disclosure can move to the position of the electric vehicle to be charged after determining the position of the electric vehicle, and then enable the connecting apparatus to be in mechanical connection with the electric vehicle conveniently. Then, to further improve a connection effect, the connecting apparatus can be locked with the help of the locking apparatus.

In addition, the thermal management apparatus 300 further includes a communication module (such as a communication chip) and a control module (such as a microcontroller chip MCU), where the communication module is configured to acquire position information of the electric vehicle, and the control module is configured to control the moving apparatus to drive the connecting apparatus to move according to the position information, to cause the connecting apparatus to be connected to or contact the grille. In this way, the thermal management apparatus for the electric vehicle according to the content of the present disclosure can acquire the position information of the electric vehicle to be charged, thereby enabling the connecting apparatus to conveniently move to the position of the electric vehicle and be in mechanical connection with the electric vehicle. For example, the communication module may be used to establish communication connections with smart devices such as mobile phones and PADs, and then the thermal management apparatus according to the content of the present disclosure may be set through these smart devices. In an embodiment according to the content of the present disclosure, the communication module is further configured to acquire size information of the grille, and the control module is further configured to adjust a size of the second end of the connecting apparatus according to the size information of the grille, to cause the connecting apparatus to be adapted to the grille.

In an embodiment according to the content of the present disclosure, the thermal management apparatus 300 further includes an image acquisition apparatus (not shown in the drawings) such as a camera, and a control module, where the image acquisition apparatus is configured to acquire image information of the electric vehicle, the control module acquires position information of the electric vehicle according to the image information of the electric vehicle, and the control module is further configured to control the moving apparatus 330 to drive the connecting apparatus 310 to move according to the position information, to cause the connecting apparatus 310 to be connected to or contact the grille. In this way, the thermal management apparatus 300 for the electric vehicle according to the content of the present disclosure can acquire the position information of the electric vehicle to be charged, thereby enabling the connecting apparatus 310 to conveniently move to the position of the electric vehicle and be in mechanical connection with the electric vehicle. For example, such a thermal management apparatus 300 with a camera may be provided around a charging pile. When an electric vehicle to be charged is detected approaching, a specific position of the electric vehicle to be charged can be analyzed based on a picture or an image captured by the camera, and then the connecting apparatus 310 is enabled to move to a relatively close position and be in mechanical connection with the electric vehicle, ensuring that the gas output from the air outlet port 312 can enter the grille of the electric vehicle to be charged.

In an embodiment according to the content of the present disclosure, the control module is further configured to acquire size information of the grille of the electric vehicle according to the image information of the electric vehicle, and the control module is further configured to adjust a size of the second end of the connecting apparatus according to the size information of the grille, to cause the connecting apparatus 310 to be adapted to the grille. In this way, the thermal management apparatus 300 for the electric vehicle according to the content of the present disclosure can dynamically determine a size of an air intake grille of a front facade of the electric vehicle to be charged according to an acquired image after determining the position of the electric vehicle to be charged, thereby enabling the connecting apparatus 310 to be conveniently adapted to the size and be in mechanical connection with the electric vehicle.

To facilitate input of a target parameter, the thermal management apparatus 300 includes an input apparatus (not shown in the drawings, such as a touch screen), and a desired flow rate and temperature value may be acquired through the input apparatus. Herein, the input apparatus is, for example, a touch screen, or a button; alternatively, the input is performed through a keyboard or a smart apparatus communicatively connected to the thermal management apparatus. In this way, the flow rate and temperature value that need to be input (i.e., the desired flow rate and temperature value) can be input into the thermal management apparatus according to the content of the present disclosure in a targeted manner. Specifically, a user may select automatic control (a movable coolant module provides a wind speed of 2 m/s and an air outlet temperature of 25°C by default) or manually set a required cooling capacity (the cooling capacity may be divided into three levels: low/middle/high) on an operation panel according to requirements; alternatively, the user may manually adjust a required air outlet speed and air outlet temperature. A control component controls operation of a refrigeration unit and the movable cold air module according to the user's set value, to provide the cooling capacity, air outlet temperature, and air outlet speed set or required by the user. A remote control function is integrated into the control module, allowing the user to establish a connection with an auxiliary thermal management apparatus by downloading an APP, enabling functions such as mobile phone reservation or direct control via a mobile phone.

The above-mentioned example describes that the thermal management apparatus according to the content of the present disclosure includes the independent refrigeration apparatus. Of course, those skilled in the art should understand that the refrigeration apparatus may also reuse an existing refrigeration apparatus, such as cold air generated by a building's central air conditioning. In this case, FIG. 4 illustrates an exemplary block diagram of a thermal management apparatus 400 according to yet another embodiment of the content of the present disclosure. As can be seen from FIG. 4, the thermal management apparatus according to the content of the present disclosure mainly includes two parts. Firstly, the thermal management apparatus 400 according to the content of the present disclosure includes a connecting apparatus 410, where the connecting apparatus 410 includes an air intake port 411 provided on a first end of the connecting apparatus 410 (for example, a left end as shown in FIG. 4), an air outlet port 412 provided on a second end of the connecting apparatus 410 (for example, a right end as shown in FIG. 4), and a channel 413 provided within the connecting apparatus 410 and used for gas flow, where one end of the channel 413 is the air intake port 411 and the other end of the channel 413 is the air outlet port 412, where the air intake port 411 is used to receive gas, a temperature of the gas flowing in through the air intake port 411 being lower than an ambient temperature of an environment where the thermal management apparatus 400 is located, and the gas flows out through the air outlet port 412 after passing through the channel 413, and where the second end of the connecting apparatus 410 is used to connect or contact a grille of the electric vehicle (not shown in the drawings), an edge of the second end of the connecting apparatus 410 being able to cover the grille of the electric vehicle, and a temperature of the gas flowing out through the air outlet port 412 is lower than the ambient temperature, to cool a component inside the grille. In this way, the gas with the temperature lower than the ambient temperature outside the vehicle can be input into a space behind the grille of the vehicle under the action of the connecting apparatus 410. There is a power battery stored in this space, thereby accelerating a cooling process of the power battery to meet a cooling requirement during charging of the power battery, so that a cooling speed of a power battery pack reaches an ideal state, increasing charging power, shortening charging time, and enhancing customer satisfaction and product competitiveness. Furthermore, secondly, the thermal management apparatus 400 further includes a refrigeration apparatus 420, where the refrigeration apparatus 420 is connected to the connecting apparatus 410, for example, through a pipeline 422, and the refrigeration apparatus 420 is configured to output gas with a temperature lower than the ambient temperature to the air intake port 411.

In order to enable the connecting apparatus 410 to better cover an air intake grille of the electric vehicle to be charged, for example, a right side of a housing of the connecting apparatus 410 may include an outer frame (for example, the periphery of the air outlet port 412) and an inner frame (a housing part forming the air outlet port 412), where the outer frame is located outside the inner frame, the channel 413 is provided inside the inner frame, and a size of the inner frame is adjustable. To further improve sealing between the connecting apparatus 410 and the electric vehicle to be charged, thereby increasing a utilization rate of the gas for cooling, the connecting apparatus 410 further includes a sealing structure (not shown in the drawings), the sealing structure is provided at the air outlet port 412 and is used to form a sealed connection between the air outlet port 412 and the grille. Specifically, this sealing structure is, for example, constructed as an elastic member. In this case, the connecting apparatus 410 further includes an elastic member (not shown in the drawings), the elastic member is provided at the second end of the connecting apparatus 410 (the right end in FIG. 3), and the elastic member is used for sealing with a housing of the vehicle.

In order to acquire a target flow rate value, in an embodiment according to the content of the present disclosure, the thermal management apparatus 400 further includes an input apparatus (not shown in the drawings, such as a touch screen), the input apparatus is configured to receive the target flow rate value, and the flow rate control apparatus is configured to regulate a gas flow rate at the air outlet port 412 according to the target flow rate value.

In addition, the thermal management apparatus 400 may further include, for example, a control module (such as a microcontroller MCU), and the control module is connected to the refrigeration apparatus 420 and is configured to regulate the temperature of the gas output by the refrigeration apparatus 420 to the air intake port 411. To acquire a target temperature value, the thermal management apparatus 400 further includes an input apparatus (not shown in the drawings, such as a touch screen), where the input apparatus is configured to receive the target temperature value, and the control module is configured to regulate the temperature of the gas output by the refrigeration apparatus 420 to the air intake port 411 through the pipeline 422 according to the target temperature value.

In addition, the thermal management apparatus 400 further includes a moving apparatus 430 (such as rollers shown in the drawings), and the moving apparatus 430 is provided on the connecting apparatus 410 (for example, at the bottom of the connecting apparatus 410 in the drawings) and is configured to adjust a position of the connecting apparatus 410 relative to the grille of the electric vehicle (not shown in the drawings). In this way, the thermal management apparatus 400 for the electric vehicle according to the content of the present disclosure can move to a position of the electric vehicle to be charged after determining the position of the electric vehicle, thereby enabling the connecting apparatus 410 to be in mechanical connection with the electric vehicle conveniently. For example, a traveling mechanism 430, driven by its own motor, is integrated into a movable cold air module, which may automatically move according to a position of a charging vehicle detected by a camera of a vehicle covering assembly, ensuring alignment between a vehicle grille covering assembly and a charging vehicle's grille, and can provide a holding force between the vehicle grille covering assembly and the charging vehicle's grille, ensuring sealing between the vehicle grille covering assembly and the charging vehicle's grille during an operation process. The movable cold air module and a refrigeration unit are connected by an elastic pipeline 422, which allows the movable cold air module to move within a designed range to meet movement requirements of different vehicle models and different parking positions. The elastic pipeline 422 is protected by a corrugated pipeline on the outside to prevent the internal elastic pipeline 422 from being worn or damaged.

After being capable of moving, in an embodiment according to the content of the present disclosure, the thermal management apparatus 400 may further include a locking apparatus (such as a bearing pin capable of locking the above-mentioned rollers, which can stop the rollers from rotating), and the locking apparatus locks the connecting apparatus when the connecting apparatus 410 reaches a preset position. In this way, the thermal management apparatus 400 for the electric vehicle according to the content of the present disclosure can move to the position of the electric vehicle to be charged after determining the position of the electric vehicle, and then enable the connecting apparatus to be in mechanical connection with the electric vehicle conveniently. Then, to further improve a connection effect, the connecting apparatus can be locked with the help of the locking apparatus.

In addition, the thermal management apparatus 400 further includes a communication module (such as a communication chip) and a control module (such as a microcontroller chip MCU), where the communication module is configured to acquire position information of the electric vehicle, and the control module is configured to control the moving apparatus to drive the connecting apparatus to move according to the position information, to cause the connecting apparatus to be connected to or contact the grille. In this way, the thermal management apparatus for the electric vehicle according to the content of the present disclosure can acquire the position information of the electric vehicle to be charged, thereby enabling the connecting apparatus to conveniently move to the position of the electric vehicle and be in mechanical connection with the electric vehicle. For example, the communication module may be used to establish communication connections with smart devices such as mobile phones and PADs, and then the thermal management apparatus according to the content of the present disclosure may be set through these smart devices. In an embodiment according to the content of the present disclosure, the communication module is further configured to acquire size information of the grille, and the control module is further configured to adjust a size of the second end of the connecting apparatus according to the size information of the grille, to cause the connecting apparatus to be adapted to the grille.

In an embodiment according to the content of the present disclosure, the thermal management apparatus 400 further includes an image acquisition apparatus (not shown in the drawings) such as a camera, and a control module, where the image acquisition apparatus is configured to acquire image information of the electric vehicle, the control module acquires position information of the electric vehicle according to the image information of the electric vehicle, and the control module is further configured to control the moving apparatus 430 to drive the connecting apparatus 410 to move according to the position information, to cause the connecting apparatus 410 to be connected to or contact the grille. In this way, the thermal management apparatus 400 for the electric vehicle according to the content of the present disclosure can acquire the position information of the electric vehicle to be charged, thereby enabling the connecting apparatus 410 to conveniently move to the position of the electric vehicle and be in mechanical connection with the electric vehicle. For example, such a thermal management apparatus 400 with a camera may be provided around a charging pile. When an electric vehicle to be charged is detected approaching, a specific position of the electric vehicle to be charged can be analyzed based on a picture or an image captured by the camera, and then the connecting apparatus 410 is enabled to move to a relatively close position and be in mechanical connection with the electric vehicle, ensuring that the gas output from the air outlet port 412 can enter the grille of the electric vehicle to be charged.

In an embodiment according to the content of the present disclosure, the control module is further configured to acquire size information of the grille of the electric vehicle according to the image information of the electric vehicle, and the control module is further configured to adjust a size of the second end of the connecting apparatus according to the size information of the grille, to cause the connecting apparatus 410 to be adapted to the grille. In this way, the thermal management apparatus 400 for the electric vehicle according to the content of the present disclosure can dynamically determine a size of an air intake grille of a front facade of the electric vehicle to be charged according to an acquired image after determining the position of the electric vehicle to be charged, thereby enabling the connecting apparatus 410 to be conveniently adapted to the size and be in mechanical connection with it.

To facilitate input of a target parameter, the thermal management apparatus 400 includes an input apparatus (not shown in the drawings, such as a touch screen), and a desired flow rate and temperature value may be acquired through the input apparatus. Herein, the input apparatus is, for example, a touch screen, or a button; alternatively, the input is performed through a keyboard or a smart apparatus communicatively connected to the thermal management apparatus. In this way, the flow rate and temperature value that need to be input (i.e., the desired flow rate and temperature value) can be input into the thermal management apparatus according to the content of the present disclosure in a targeted manner. Specifically, a user may select automatic control (a movable coolant module provides a wind speed of 2 m/s and an air outlet temperature of 25°C by default) or manually set a required cooling capacity (the cooling capacity may be divided into three levels: low/middle/high) on an operation panel according to requirements; alternatively, the user may manually adjust a required air outlet speed and air outlet temperature. A control component controls operation of a refrigeration unit and the movable cold air module according to the user's set value, to provide the cooling capacity, air outlet temperature, and air outlet speed set or required by the user. A remote control function is integrated into the control module, allowing the user to establish a connection with an auxiliary thermal management apparatus by downloading an APP, enabling functions such as mobile phone reservation or direct control via a mobile phone.

The difference from FIG. 3 is that the thermal management apparatus 400 shown in FIG. 4 does not have its own independent refrigeration apparatus. Instead, the air intake port 411 of the thermal management apparatus 400 is connected to a cold air pipeline 422 with cold air supply, such as a building's central air conditioning 420, thereby being able to acquire gas with a temperature lower than the ambient temperature. This not only reduces manufacturing cost of the thermal management apparatus 400 according to the content of the present disclosure but also improves cooling efficiency and reduces cooling costs. In this case, the thermal management apparatus 400 may be arranged near a charging pile 440 and shared by multiple nearby charging piles 440. After the electric vehicle is connected to both the charging pile 440 and the thermal management apparatus 400, the thermal management apparatus 400 will automatically identify a charging pile where charging is performed according to a position of the movable cold air module, and energy consumption cost incurred will be included in the charging pile for vehicle charging.

A structure of the refrigeration apparatus 420 according to the content of the present disclosure will be further described below. Herein, the refrigeration apparatus 420 includes a compressor, an evaporator, a condenser, and a refrigerant pipeline for connecting the compressor, the evaporator, and the condenser. In this way, the thermal management apparatus according to the content of the present disclosure also has the refrigerant pipeline, thereby enabling further optimized regulation of a temperature of gas entering the connecting apparatus 410. Herein, a single connecting apparatus 410 may use one refrigeration apparatus 420, or, two or three connecting apparatus 410 may share one refrigeration apparatus 420, for example. In summary, in an embodiment according to the content of the present disclosure, one said refrigeration apparatus 420 is connected to one said connecting apparatus 410, or, one said refrigeration apparatus 420 is connected to at least two said connecting apparatus 410. In other words, generally, one charging pile needs to be equipped with one connecting apparatus, but multiple charging piles may share one cold source, i.e., a shared refrigeration apparatus. As shown in FIG. 4, the refrigeration apparatus 420 is not in a one-to-one correspondence with the connecting apparatus 410 nor exclusively used by the connecting apparatus 410; instead, a refrigeration apparatus of other connecting apparatuses 410 or charging piles 440 is shared, or a refrigeration facility of a building is even shared.

In addition, a second aspect of the content of the present disclosure provides a charging pile, and the charging pile includes the thermal management apparatus provided in the first aspect according to the content of the present disclosure. That is, the thermal management apparatus may be integrated with the charging pile, enabling the charging pile to additionally have a thermal management function.

Furthermore, the above-mentioned thermal management apparatus may also be constructed relatively independently from the charging pile but they can cooperate with each other during a specific operation. That is, the content of the present disclosure further provides a charging system, and the charging system includes the thermal management apparatus provided in the first aspect according to the content of the present disclosure or the charging pile provided in the second aspect according to the content of the present disclosure.

In conclusion, in the thermal management apparatus for the electric vehicle, the charging system or the charging pile according to the content of the present disclosure, the gas with the temperature lower than the ambient temperature outside the vehicle can be input into the space behind the grille of the vehicle under the action of the connecting apparatus. There is the power battery stored in this space, thereby accelerating the cooling process of the power battery to meet the cooling requirement during the charging of the power battery, so that the cooling speed of the power battery pack reaches the ideal state, increasing the charging power, shortening the charging time, and enhancing the customer satisfaction and the product competitiveness.

Although the embodiments of the content of the present disclosure have been described with reference to several specific embodiments, it should be understood that the embodiments of the content of the present disclosure are not limited to the disclosed specific embodiments. The embodiments of the content of the present disclosure are intended to cover various modifications and equivalent arrangements included within the spirit and scope of the appended claims. The scope of the claims is to be accorded the broadest interpretation so as to encompass all such modifications and equivalent structures and functions.

## Claims

1. A thermal management apparatus for an electric vehicle, wherein the thermal management apparatus comprises a connecting apparatus, wherein the connecting apparatus comprises:
an air intake port provided on a first end of the connecting apparatus;
an air outlet port provided on a second end of the connecting apparatus; and
a channel provided within the connecting apparatus and used for gas flow, wherein one end of the channel is the air intake port, and the other end of the channel is the air outlet port,
wherein the air intake port is used to receive gas, a temperature of the gas flowing in through the air intake port being lower than an ambient temperature of an environment where the thermal management apparatus is located, and the gas flows out through the air outlet port after passing through the channel, and
wherein the second end of the connecting apparatus is used to connect or contact a grille of the electric vehicle, an edge of the second end of the connecting apparatus being able to cover the grille of the electric vehicle, and a temperature of the gas flowing out through the air outlet port is lower than the ambient temperature, to cool a component inside the grille.

2. The thermal management apparatus according to claim 1, wherein the second end of the connecting apparatus is constructed as scalable, and a size of the second end of the connecting apparatus is adjustable according to a size of the grille.

3. The thermal management apparatus according to claim 1 or 2, wherein the connecting apparatus comprises an outer frame and an inner frame, the outer frame is located outside the inner frame, the channel is provided inside the inner frame, and a size of the inner frame is adjustable.

4. The thermal management apparatus according to claim 3, wherein the connecting apparatus further comprises an elastic member, the elastic member is provided at the second end of the connecting apparatus, and the elastic member is used for sealing with a housing of the vehicle.

5. The thermal management apparatus according to any one of claims 1 to 4, wherein the connecting apparatus further comprises a sealing structure, and the sealing structure is provided at the air outlet port and is used to form a sealed connection between the air outlet port and the grille.

6. The thermal management apparatus according to any one of claims 1 to 5, wherein the thermal management apparatus further comprises:
a flow rate control apparatus, wherein the flow rate control apparatus is in fluid communication with the air intake port and is configured to regulate a gas flow rate at the air outlet port.

7. The thermal management apparatus according to claim 6, wherein the thermal management apparatus further comprises an input apparatus, the input apparatus is configured to receive a target flow rate value, and the flow rate control apparatus is configured to regulate the gas flow rate at the air outlet port according to the target flow rate value.

8. The thermal management apparatus according to any one of claims 1 to 7, wherein the thermal management apparatus further comprises:
a refrigeration apparatus, wherein the refrigeration apparatus is connected to the connecting apparatus, and the refrigeration apparatus is configured to output gas with a temperature lower than the ambient temperature to the air intake port.

9. The thermal management apparatus according to claim 8, wherein the thermal management apparatus further comprises a control module, and the control module is connected to the refrigeration apparatus and is configured to regulate the temperature of the gas output by the refrigeration apparatus to the air intake port.

10. The thermal management apparatus according to claim 9, wherein the thermal management apparatus further comprises an input apparatus, the input apparatus is configured to receive a target temperature value, and the control module is configured to regulate the temperature of the gas output by the refrigeration apparatus to the air intake port according to the target temperature value.

11. The thermal management apparatus according to claim 8, wherein the refrigeration apparatus comprises a compressor, an evaporator, a condenser, and a refrigerant pipeline used for connecting the compressor, the evaporator, and the condenser.

12. The thermal management apparatus according to claim 11, wherein one said refrigeration apparatus is connected to one said connecting apparatus, or, one said refrigeration apparatus is connected to at least two said connecting apparatuses.

13. The thermal management apparatus according to any one of claims 1 to 12, wherein the thermal management apparatus further comprises a moving apparatus, the connecting apparatus being connected with the moving apparatus, wherein the moving apparatus is configured to drive the connecting apparatus to move, to adjust a position of the connecting apparatus relative to the grille of the electric vehicle.

14. The thermal management apparatus according to claim 13, wherein the thermal management apparatus further comprises:
a locking apparatus, wherein the locking apparatus is configured to lock the connecting apparatus when the connecting apparatus is connected to or contacts the grille.

15. The thermal management apparatus according to claim 13 or 14, wherein the thermal management apparatus further comprises a communication module and a control module, wherein the communication module is configured to acquire position information of the electric vehicle, and the control module is configured to control the moving apparatus to drive the connecting apparatus to move according to the position information, to cause the connecting apparatus to be connected to or contact the grille.

16. The thermal management apparatus according to claim 15, wherein the communication module is further configured to acquire size information of the grille, and the control module is further configured to adjust a size of the second end of the connecting apparatus according to the size information of the grille, to cause the connecting apparatus to be adapted to the grille.

17. The thermal management apparatus according to claim 13 or 14, wherein the thermal management apparatus further comprises an image acquisition apparatus and a control module, wherein the image acquisition apparatus is configured to acquire image information of the electric vehicle, the control module acquires position information of the electric vehicle according to the image information of the electric vehicle, and the control module is further configured to control the moving apparatus to drive the connecting apparatus to move according to the position information, to cause the connecting apparatus to be connected to or contact the grille.

18. The thermal management apparatus according to claim 17, wherein the control module is further configured to acquire size information of the grille of the electric vehicle according to the image information of the electric vehicle, and the control module is further configured to adjust a size of the second end of the connecting apparatus according to the size information of the grille, to cause the connecting apparatus to be adapted to the grille.

19. The thermal management apparatus according to claim 13 or 14, wherein the thermal management apparatus further comprises an input apparatus and a control module, wherein the input apparatus is configured to receive position information of the electric vehicle, and the control module is further configured to control the moving apparatus to drive the connecting apparatus to move according to the position information, to cause the connecting apparatus to be connected to or contact the grille.

20. The thermal management apparatus according to claim 19, wherein the input apparatus is further configured to receive size information of the grille, and the control module is further configured to adjust a size of the second end of the connecting apparatus according to the size information of the grille, to cause the connecting apparatus to be adapted to the grille.

21. A charging system, wherein the charging system comprises the thermal management apparatus according to any one of claims 1 to 20.

22. A charging pile, wherein the charging pile comprises the thermal management apparatus according to any one of claims 1 to 20, or the charging system according to claim 21.
